# EUROPÄISCHE PATENTSCHRIFT

(11) **EP 4 114 699 B1**
(45) Veröffentlichungstag und Bekanntmachung des Hinweises auf die Patenterteilung: **01.11.2023**
(21) Anmeldenummer: 21707188.5
(22) Anmeldetag: 18.02.2021
(51) Int. Cl.: B60W 10/02, B60W 10/06, B60W 10/08, B60W 30/186, B60W 20/50, B60W 30/192, B60K 6/387, B60K 6/48

(54) **VERFAHREN ZUM BETREIBEN EINER HYBRIDANTRIEBSEINRICHTUNG FÜR EIN KRAFTFAHRZEUG SOWIE ENTSPRECHENDE HYBRIDANTRIEBSEINRICHTUNG**
METHOD FOR OPERATING A HYBRID DRIVE ASSEMBLY FOR A MOTOR VEHICLE AND CORRESPONDING HYBRID DRIVE ASSEMBLY
PROCÉDÉ DE FONCTIONNEMENT D'UN ENSEMBLE D'ENTRAÎNEMENT HYBRIDE POUR UN VÉHICULE AUTOMOBILE ET ENSEMBLE D'ENTRAÎNEMENT HYBRIDE CORRESPONDANT

(30) Priorität: 03.03.2020 DE 102020105592
(43) Veröffentlichungstag der Anmeldung: 11.01.2023
(73) Patentinhaber: Audi AG, 85057 Ingolstadt (DE)
(72) Erfinder: JONUSCHEIT, Michael, 90402 Nürnberg (DE)
(74) Vertreter: Dietz, Christopher Friedrich
(86) Internationale Anmeldenummer: PCT/EP2021/053930
(87) Internationale Veröffentlichungsnummer: WO 2021/175597

(56) Entgegenhaltungen:
- JP-A- 2010 083 426
- JP-A- 2015 074 299
- US-A1- 2014 129 066

## Beschreibung

Die Erfindung betrifft ein Verfahren zum Betreiben einer Hybridantriebseinrichtung für ein Kraftfahrzeug, die eine Brennkraftmaschine und eine elektrische Maschine aufweist, wobei während eines Startversuchs der Brennkraftmaschine eine zwischen der Brennkraftmaschine und der elektrischen Maschine antriebstechnisch angeordnete Trennkupplung durch zumindest teilweises Schließen auf ein Sollkupplungsmoment eingestellt wird. Die Erfindung betrifft weiterhin eine Hybridantriebseinrichtung für ein Kraftfahrzeug.

Aus dem Stand der Technik ist beispielsweise die Druckschrift EP 2 689 157 B1 bekannt. Diese betrifft eine Sicherheitskupplung für ein Kraftfahrzeug zur Übertragung eines Antriebsmoments zwischen einer Maschinenwelle, einer elektrischen Maschine und einer wenigstens ein Rad eines Fahrzeugs antreibenden Radantriebswelle. Im störungsfreien Normalbetrieb erfolgt über eine lösbare Formschlusskupplung eine Drehmomentübertragung zwischen der Maschinenwelle und der Radantriebswelle. Bei Auftreten eines einen Grenzwert übersteigenden Drehmoments löst die lösbare Formschlusskupplung aus, sodass eine elastische Kupplungseinrichtung die Drehmomentübertragung wenigstens kurzzeitig übernimmt.

Die Druckschrift US 2014/0129066 A1 beschreibt eine Steuervorrichtung für ein Hybridfahrzeug, das einen Motor und einen Elektromotor, die jeweils als Antriebsquelle dienen, und eine Kupplung zum selektiven Verbinden des Motors und des Elektromotors miteinander aufweist, wobei die Steuervorrichtung dazu ausgebildet ist, einen Antriebsmodus des Hybridfahrzeugs zwischen einem motorgetriebenem Betrieb, wobei wenigstens der Motor der aus dem Motor und dem Elektromotor bestehenden Antriebsquelle als die Antriebsquelle verwendet wird und die Kupplung in einem vollständig geschlossenen Zustand ist, und einem elektromotorgetriebenen Betrieb, wobei der Elektromotor als die Antriebsquelle verwendet wird und die Kupplung in einem vollständig geöffneten Zustand ist, umzuschalten, wobei die Steuervorrichtung einen kupplungstemperaturberechnenden Teil, der dazu ausgebildet ist, während des motorgetriebenen Betriebs eine bei einem nächsten Schließen der Kupplung zum Umschalten des Antriebsmodus von dem nachfolgenden elektromotorgetriebenen Betrieb zurück in den motorgetriebenen Betrieb vorliegende voraussichtliche Temperatur der Kupplung zu berechnen, und einen Umschaltsteuerteil, der dazu ausgebildet ist, den motorgetriebenen Betrieb fortzusetzen während ein Öffnen der Kupplung unterdrückt wird, wenn die von dem kupplungstemperaturberechnenden Teil berechnete voraussichtliche Temperatur der Kupplung nicht kleiner als ein bestimmter Überhitzungsgrenzwert ist, beinhaltet.

Aus dem Stand der Technik sind weiterhin die Druckschriften JP 2015 074299 A und JP 2010 083426 A bekannt.

Es ist Aufgabe der Erfindung, ein Verfahren zum Betreiben einer Hybridantriebseinrichtung für ein Kraftfahrzeug vorzuschlagen, welches gegenüber anderen Verfahren Vorteile aufweist, insbesondere eine Beschädigung der Trennkupplung aufgrund einer klemmenden oder schwergängigen Brennkraftmaschine während des Startversuchs vermeidet.

Dies wird erfindungsgemäß mit dem Verfahren zum Betreiben einer Hybridantriebseinrichtung mit den Merkmalen des Anspruchs 1 erreicht. Dabei ist vorgesehen, dass während des Startversuchs ein über die Trennkupplung tatsächlich übertragenes Istkupplungsmoment sowie eine Drehzahl der Brennkraftmaschine ermittelt werden und bei einem Überschreiten eines Schwellenwerts durch einen von dem Istkupplungsmoment abhängigen Kennwert und einem während des Startversuchs durchgehenden Unterschreiten eines Grenzwerts durch ein Integral der Drehzahl über der Zeit der Startversuch abgebrochen wird.

Die Hybridantriebseinrichtung dient dem Antreiben des Kraftfahrzeugs, insoweit also dem Bereitstellen eines auf das Antreiben des Kraftfahrzeugs gerichteten Drehmoments. Die Hybridantriebseinrichtung verfügt über die Brennkraftmaschine sowie die elektrische Maschine. Diese sind dazu vorgesehen und ausgebildet, ein von der Hybridantriebseinrichtung geliefertes Antriebsdrehmoment jeweils alleine oder zumindest zeitweise gemeinsam bereitzustellen. Das bedeutet, dass das Antriebsdrehmoment nur von der Brennkraftmaschine und ohne Verwendung der elektrischen Maschine, nur von der elektrischen Maschine und ohne Verwendung der Brennkraftmaschine oder von der Brennkraftmaschine und der elektrischen Maschine gemeinsam bereitgestellt wird.

Eine hinreichende Versorgung mit elektrischer Energie vorausgesetzt, beispielsweise bei Vorliegen eines hinreichenden Ladestandes eines elektrischen Energiespeichers, kann die elektrische Maschine das Antriebsmoment alleine, also ohne Verwendung der Brennkraftmaschine liefern. Die Brennkraftmaschine kann zugeschaltet werden, um das Antriebsdrehmoment alleine oder durch Zusammenwirken mit der elektrischen Maschine bereitzustellen. Hierzu ist es vorgesehen, die Brennkraftmaschine mittels der elektrischen Maschine zu starten.

Um die Brennkraftmaschine zu starten, wird der Startversuch durchgeführt. Der Startversuch beginnt bei Vorliegen einer Anforderungsgröße an die Hybridantriebseinrichtung, die den Wunsch nach einem Zuschalten der Brennkraftmaschine signalisiert. Der Startversuch endet entweder mit einem erfolgreichen Start der Brennkraftmaschine oder einem Abbruch des Startversuchs.

Unter dem Startversuch ist ein Vorgang zu verstehen, bei welchem versucht wird, die Brennkraftmaschine derart einzustellen, dass sie nachfolgend zumindest einen Teil des Antriebsdrehmoments bereitstellen kann beziehungsweise bereitstellt. Während des Startversuchs soll die Drehzahl der Brennkraftmaschine, beispielsweise aus dem Stillstand heraus, auf eine von null verschiedene Drehzahl gebracht werden, insbesondere auf eine Drehzahl, welche zumindest einer Mindestdrehzahl, einer Leerlaufdrehzahl und/oder eine Synchrondrehzahl der Brennkraftmaschine entspricht.

Die Mindestdrehzahl ist diejenige Drehzahl, ab welcher die Brennkraftmaschine selbsttätig, also ohne einen externen Antrieb wie einen Starter, ihre Drehzahl weiter erhöhen kann. Die Leerlaufdrehzahl ist diejenige Drehzahl, bei welcher die Brennkraftmaschine betrieben wird, wenn sie kein Antriebsdrehmoment bereitstellt, sondern lediglich ihre Drehzahl halten soll. Die Leerlaufdrehzahl ist bevorzugt für eine leisen und/oder vibrationsarmen Lauf der Brennkraftmaschine gewählt. Die Leerlaufdrehzahl ist vorzugsweise größer als die Mindestdrehzahl.

Unter der Synchrondrehzahl ist eine Drehzahl der Brennkraftmaschine zu verstehen, die einer momentan vorliegenden Drehzahl der elektrischen Maschine entspricht. Bei Vorliegen der Synchrondrehzahl liegt an der Trennkupplung kein Schlupf vor, so dass die Trennkupplung vollständig geschlossen und eine starre Verbindung zwischen der Brennkraftmaschine und der elektrischen Maschine hergestellt werden kann. Die Synchrondrehzahl ist vorzugsweise größer als die Mindestdrehzahl. Sie kann der Leerlaufdrehzahl entsprechen oder größer sein als diese.

Vorzugsweise endet der Startversuch bei dem Vorliegen der Synchrondrehzahl und mit dem vollständigen Schließen der Trennkupplung.

Während des Startversuchs wird die Trennkupplung zumindest teilweise geschlossen. Hierbei wird die Trennkupplung auf das Sollkupplungsmoment eingestellt. Das Sollkupplungsmoment dient dem Erhöhen der Drehzahl der Brennkraftmaschine in Richtung der Mindestdrehzahl und entspricht vorzugsweise einem Anschleppmoment, bei dessen Vorliegen die Drehzahl der Brennkraftmaschine die Mindestdrehzahl, die Leerlaufdrehzahl und/oder die Synchrondrehzahl erreichen kann.

Bei Vorliegen eines Fehlers oder Defekts der Brennkraftmaschine kann eine Situation eintreten, in der die Drehzahl der Brennkraftmaschine die Mindestdrehzahl nicht erreicht oder die Mindestdrehzahl nur kurzfristig erreicht wird und die Drehzahl nachfolgend unter die Mindestdrehzahl fällt.

Der Fehler beziehungsweise Defekt liegt insbesondere in Form eines mechanischen Defekts vor, zum Beispiel in Form eines Klemmens der Abtriebswelle und/oder anderer drehenden Teile der Brennkraftmaschine. Beispielsweise kann die Fehlfunktion durch eine unzureichende Schmierung der Brennkraftmaschine verursacht werden, was sich in einer Schwergängigkeit der Brennkraftmaschine oder einem sogenannten Kolbenfresser äußert. In jedem Fall handelt es sich bei hierbei um einen Fehler, der das zum Erreichen der Mindestdrehzahl erforderliche Anschleppmoment gegenüber einer fehlerfreien Brennkraftmaschine vergrößert oder ein Erreichen der Mindestdrehzahl unmöglich macht. Somit kann der Startversuch nicht erfolgreich abgeschlossen werden oder, falls die Brennkraftmaschine trotz Vorliegen der fehlerhaften Brennkraftmaschine die Mindestdrehzahl kurzzeitig erreicht, wird er abgeschlossen ohne die Brennkraftmaschine erfolgreich zu starten.

Dies führt dazu, dass die Trennkupplung während des Startversuchs über einen längeren Zeitraum mit dem Sollkupplungsmoment beaufschlagt wird oder, im Falle des kurzfristigen Erreichens der Mindestdrehzahl durch die Drehzahl der Brennkraftmaschine, fälschlicherweise vollständig geschlossen wird. Hierdurch kann eine Beschädigung der Trennkupplung erfolgen, beispielsweise aufgrund einer hohen thermischen und/oder mechanischen Belastung.

Zur Vermeidung der Beschädigung der Trennkupplung sieht das erfindungsgemäße Verfahren den Abbruch des Startversuchs vor. Dabei soll der Startversuch abgebrochen werden, falls die Brennkraftmaschine nicht erfolgreich startet und somit die fehlerhafte Brennkraftmaschine vorliegt.

Das Erkennen des Fehlers beziehungsweise Defekts der Brennkraftmaschine ist nicht trivial. Um die fehlerhafte Brennkraftmaschine zu erkennen, sieht das erfindungsgemäße Verfahren daher wenigstens zwei Bedingungen vor, bei deren Vorliegen der Startversuch abgebrochen wird.

Die erste Bedingung für den Abbruch des Startversuchs ist erfüllt, wenn der von dem Istkupplungsmoment abhängige Kennwert den Schwellenwert überschreitet. Es wird insoweit darauf geprüft, ob das von der Trennkupplung tatsächlich übertragene Istkupplungsmoment zumindest einem zum Starten einer fehlerfreien Brennkraftmaschine notwendigen Drehmoment entspricht. In anderen Worten wird durch die erste Bedingung eine ordnungsgemäße Funktion der Trennkupplung festgestellt.

Es könnte nun vorgesehen sein, als zweite Bedingung ein erfolgreiches Starten der Brennkraftmaschine zu erkennen, wenn die Drehzahl der Brennkraftmaschine die Mindestdrehzahl und/oder die Leerlaufdrehzahl erreicht beziehungsweise diese überschreitet. Das Vorliegen der fehlerhaften Brennkraftmaschine kann allerdings dazu führen, dass die Drehzahl der Brennkraftmaschine während des Startversuchs zwar kurzzeitig die Mindestdrehzahl und/oder die Leerlaufdrehzahl erreicht, aufgrund der Fehlfunktion allerdings anschließend wieder unter diese Werte fällt.

Stattdessen sieht die Erfindung vor, die zweite Bedingung auf das Integral der Drehzahl zu richten. Die zweite Bedingung für den Abbruch des Startversuchs ist erfüllt, wenn das Integral der Drehzahl über der Zeit während des Startversuchs durchgehend den Grenzwert unterschreitet. Schlussendlich wird also auf einen Fehler der Brennkraftmaschine geschlossen, wenn die Drehzahl der Brennkraftmaschine, insbesondere trotz ausreichend großem Istkupplungsmoment, nicht die Mindestdrehzahl erreicht oder die Mindestdrehzahl lediglich kurzzeitig überschreitet. In anderen Wort wird durch die zweite Bedingung festgestellt, ob die Drehbewegung der Brennkraftmaschine in für ihren Start hinreichendem Maß vorliegt.

Um die erste Bedingung zu überprüfen sieht das erfindungsgemäße Verfahren vor, während des Startversuchs das über die Trennkupplung tatsächlich übertragene Istkupplungsmoment zu ermitteln. Das von der Trennkupplung tatsächlich übertragene Istkupplungsmoment kann beispielsweise mittels eines Kennfelds der Trennkupplung ermittelt werden, insbesondere in Verbindung mit einem Istwert einer Stellgröße der Trennkupplung, beispielsweise einem Anpressdruck. Hierzu kann beispielsweise ein Istwert des Anpressdrucks ermittelt und mit einem aus dem Sollkupplungsmoment ermittelten Sollwert des Anpressdrucks verglichen werden. Zusätzlich oder alternativ kann das Istkupplungsmoment mittels eines Modells berechnet werden, welches beispielsweise auf einer Eingangsseite und einer Ausgangsseite der Trennkupplung vorliegende Drehzahlen sowie Trägheitsmomente der entsprechenden drehenden Komponenten berücksichtig.

Das ermittelte Istkupplungsmoment liegt in Form eines Verlauf des Istkupplungsmoments über der Zeit vor. Insofern kann zu jedem Zeitpunkt während des Startversuchs ein entsprechender momentaner Wert des Istkupplungsmoments ermittelt werden, der dem tatsächlich übertragenen Istkupplungsmoment entspricht oder dieses zumindest näherungsweise abbildet. Aus dem Istkupplungsmoment oder dem zeitlichen Verlauf des Istkupplungsmoments wird der Kennwert gebildet, dessen Überschreiten des Schwellenwerts die erste Bedingung für den Startabbruch darstellt. Der Kennwert dient dem Erkennen der Funktionsfähigkeit der Trennkupplung. Überschreitet der von dem Istkupplungsmoment abhängige Kennwert den Schwellenwert, so wird von einer Funktionsfähigkeit der Trennkupplung ausgegangen.

Beispielsweise entspricht der Kennwert dem Istkupplungsmoment. Vorzugsweise handelt es sich jedoch bei dem Kennwert um eine aus dem Verlauf des Istkupplungsmoments ermittelte Größe, die das bei oder unmittelbar nach dem zumindest teilweisen Schließen übertragene Istkupplungsmoment abbildet beziehungsweise näherungsweise diesem entspricht. Der Kennwert kann beispielsweise ein Maximalwert des Istkupplungsmoments, eine Differenz zweier Werte oder ein Gradient des Istkupplungsmoments, jeweils innerhalb eines definierten Zeitfensters sein.

Um die zweite Bedingung für Abbruch des Startversuchs zu überprüfen, wird zusätzlich zu dem tatsächlich übertragenen Istkupplungsmoment die Drehzahl der Brennkraftmaschine ermittelt. Die Drehzahl der Brennkraftmaschine liegt vorzugsweise ebenfalls in Form eines Verlaufs über der Zeit vor. Aus dem Verlauf der Drehzahl über der Zeit wird das Integral der Drehzahl ermittelt. Insbesondere werden Messwerte der Drehzahl über der Zeit aufsummiert. Gemäß dem erfindungsgemäßen Verfahrens ist es für einen erfolgreichen Start der Brennkraftmaschine nicht ausreichend, die Drehzahl lediglich kurzzeitig auf die Mindestdrehzahl zu erhöhen, vielmehr muss die Drehzahl über einen ausreichend langen Zeitraum von null verschieden sein, um den Grenzwert durch das Integral der Drehzahl zu überschreiten. Durch eine Berücksichtigung des Integrals der Drehzahl erfolgt somit eine zuverlässige Erkennung der Drehbewegung der Brennkraftmaschine.

Um beide Bedingungen zu erfüllen und in Folge den Startversuch abzubrechen, muss einerseits der von dem Istkupplungsmoment abhängige Kennwert den Schwellenwert überschreiten und andererseits das Integral der Drehzahl während des Startversuchs den Grenzwert durchgehend unterschreiten. Eine derartige Vorgehensweise stellt sicher, dass der Fehler beziehungsweise der Defekt der Brennkraftmaschine während des Startversuchs erkannt wird. Somit wird eine Beschädigung der Trennkupplung zuverlässig vermieden.

Eine Weiterbildung der Erfindung sieht vor, dass der Startversuch nur bei einem zusätzlichen Überschreiten eines Temperaturschwellenwerts durch eine Temperatur der Trennkupplung abgebrochen wird. Die Temperatur der Trennkupplung wird somit zur Prüfung einer dritten Bedingung für den Abbruch des Startversuchs herangezogen, die zusätzlich zu der ersten Bedingung und der zweiten Bedingung erfüllt sein muss. Dabei ist vorgesehen, den Startversuch abzubrechen, falls die Temperatur der Trennkupplung den Temperaturschwellenwert überschreitet. In anderen Worten wird der Startversuch fortgesetzt, solange die Temperatur der Trennkupplung unterhalb des Temperaturschwellenwerts liegt. Hierdurch wird der Startversuch abgebrochen, bevor die Temperatur der Trennkupplung einen kritischen Wert erreichen kann und eine Beschädigung vermieden.

Eine Weiterbildung der Erfindung sieht vor, dass zum Abbrechen des Startversuchs die Trennkupplung geöffnet und ein Fehlereintrag in einen Fehlerspeicher eingetragen wird, wobei nachfolgend ein Schließen der Trennkupplung verhindert wird, solange der Fehlereintrag in dem Fehlerspeicher eingetragen ist. Da das Starten der Brennkraftmaschine mittels der elektrischen Maschine erfolgt, wozu die Trennkupplung zumindest teilweise geschlossen wird, wird der Startversuch durch ein Öffnen der Trennkupplung abgebrochen, insbesondere wird die Trennkupplung zum Abbrechen des Startversuchs vollständig geöffnet.

Gleichzeitig erfolgt der Eintrag des Fehlereintrags in dem Fehlerspeicher, der beispielsweise in einem Steuergerät der Brennkraftmaschine und/oder der Hybridantriebseinrichtung vorliegt. Nach dem Abbrechen des Startversuchs wird von dem Vorliegen der fehlerhaften Brennkraftmaschine ausgegangen. Daher wird nachfolgend das Schließen der Trennkupplung verhindert, solange der Fehlereintrag in dem Fehlerspeicher eingetragen ist. Hierdurch wird ein wiederholtes Schließen der Trennkupplung und die damit verbundene mögliche Beschädigung der Trennkupplung verhindert. Anstelle des Eintragens des Fehlereintrags kann ein Festhalten eines Fehlerzustands erfolgen. Dabei wird der Fehlerzustand bei dem Abbrechen des Startversuchs als aktiv markiert. Somit liegt nach dem Abbrechen des Startversuchs ein als aktiv markierter Fehlerzustand vor. Während des Vorliegens des aktiven Fehlerzustands steht die Brennkraftmaschine nicht zum Bereitstellen des Antriebsdrehmoments zu Verfügung. Der aktive Fehlerzustand kann mit einer Durchführung entsprechender Gegenmaßnahmen verbunden sein, die einen zuverlässigen Betrieb der Hybridantriebseinrichtung ohne eine Verwendung der Brennkraftmaschine ermöglichen.

Eine Weiterbildung der Erfindung sieht vor, dass nach Ablauf eines bestimmten Zeitraums nach dem Abbrechen des Startversuchs der Fehlereintrag aus dem Fehlerspeicher gelöscht wird. Wie bereits vorstehend erläutert, werden das Schließen der Trennkupplung und somit ein erneuter Startversuch der Brennkraftmaschine verhindert, solange der Fehlereintrag in dem Fehlerspeicher eingetragen ist. Ein erneuter Startversuch ist erst nach einem Löschen des Fehlereintrags aus dem Fehlerspeicher möglich.

Es ist nun vorgesehen, den Fehlereintrag nach Ablauf des bestimmten Zeitraums nach dem Abbrechen des Startversuchs zu löschen. Somit wird das Schließen der Trennkupplung nach dem Abbrechen des Startversuchs nicht dauerhaft verhindert, sondern lediglich über den bestimmten Zeitraum. Die Länge des bestimmten Zeitraum kann an weitere Bedingungen geknüpft sein, beispielsweise an ein zwischenzeitlich erfolgtes Abschalten der Hybridantriebseinrichtung. Hierdurch wird verhindert, dass nach dem Abbrechen des Startversuchs und dem Ablauf des bestimmten Zeitraums kein erneuter Startversuch mehr möglich ist. Erfolgte bei dem Abbrechen des Startversuchs das Festhalten des Fehlerzustandes, so wird dieser nach Ablauf des bestimmten Zeitraums als passiv markiert. Während des Vorliegens des passiven Fehlerzustands werden die vorstehend genannten Gegenmaßnahmen nicht mehr durchgeführt, sodass ein zuverlässiger Betrieb der Hybridantriebseinrichtung unter Verwendung der Brennkraftmaschine ermöglicht wird.

Eine Weiterbildung der Erfindung sieht vor, dass nur bei einem Unterschreiten des Temperaturschwellenwerts durch die Temperatur der Trennkupplung über den bestimmten Zeitraum der Fehlereintrag aus dem Fehlerspeicher gelöscht wird. Wie vorstehend erläutert, kann es vorgesehen sein, dass der Startversuch nur bei dem zusätzlichen Überschreiten des Temperaturschwellenwerts durch die Temperatur der Trennkupplung abgebrochen wird. Dementsprechend wird der Fehlereintrag nur dann aus dem Fehlerspeicher gelöscht, wenn die Temperatur der Trennkupplung den Temperaturschwellenwert unterschreitet. Erfolgte bei dem Abbrechen des Startversuchs das Festhalten des Fehlerzustandes, so wird dieser - wie vorstehend erläutert - als passiv markiert.

Hierdurch wird sichergestellt, dass ein erneuter Startversuch verhindert wird, solange die Temperatur der Trennkupplung oberhalb des Temperaturschwellenwerts vorliegt. In anderen Worten, wird nach dem Abbruch des Startversuch ein erneuter Startversuch verhindert, solange sich die Temperatur der Trennkupplung in einem kritischen Temperaturbereich befindet und somit eine Beschädigung der Trennkupplung aufgrund der fehlerhaften Brennkraftmaschine wahrscheinlicher wird.

Eine Weiterbildung der Erfindung sieht vor, dass als Kennwert ein nach dem zumindest teilweisen Schließen der Trennkupplung auftretender Maximalwert des Istkupplungsmoments verwendet wird. Wie bereits vorstehend erläutert, stellt der Kennwert eine von dem Istkupplungsmoment abhängige Größe dar. Es ist vorgesehen, den Maximalwert des Istkupplungsmoments als Kennwert zu verwenden, der innerhalb eines Zeitfensters auftritt, das mit dem teilweisen Schließen der Trennkupplung beginnt und zu einem vorbestimmten Zeitpunkt nach dem teilweisen Schließens der Trennkupplung endet. In anderen Worten wird als Kennwert nicht der während des gesamten Startversuchs auftretende Maximalwert des Istkupplungsmoments herangezogen, sondern lediglich der innerhalb des vordefinierten Zeitfensters auftretende Maximalwert des Istkupplungsmoments. Da der Kennwert der Überprüfung der ordnungsgemäßen Funktion der Trennkupplung dient, ist es vorteilhaft diese Überprüfung innerhalb des Zeitfensters durchzuführen. Alternativ kann als Kennwert ein innerhalb des Zeitfensters auftretender Gradient des Istkupplungsmoments verwendet werden. Diese Vorgehensweise ermöglicht eine Überprüfung, ob die Trennkupplung eine für deren ordnungsgemäße Funktion ausreichend schnelle Reaktionsgeschwindigkeit zeigt.

Eine Weiterbildung der Erfindung sieht vor, dass als Kennwert eine Differenz zwischen dem Maximalwert und einem vor dem teilweisen Schließen der Trennkupplung auftretenden Minimalwert des Istkupplungsmoments verwendet wird. Da das Ermitteln des Istkupplungsmoments mit absoluten und relativen Fehlern behaftet sein kann, sieht die Erfindung vor, zusätzlich zu dem Maximalwert den Minimalwert zu bestimmen und als Kennwert eine Differenz aus diesen Werten zu verwenden. Auf diese Weise werden bei dem Ermitteln des tatsächlich übertragenen Istkupplungsmoments Fehler ausgeglichen und die Verlässlichkeit der Bestimmung des Kennwerts verbessert.

Eine Weiterbildung der Erfindung sieht vor, dass das Sollkupplungsmoment bei dem Schließen auf einen ersten Wert eingestellt und während des Startversuchs in Richtung eines zweiten Werts vergrößert wird, bis die Drehzahl der Brennkraftmaschine eine Mindestdrehzahl erreicht hat. Während des Startversuchs wird das Sollkupplungsmoment zunächst auf einen ersten Wert eingestellt, insbesondere auf einen vorgegebenen ersten Wert. Anschließend wird das Sollkupplungsmoment erhöht, bis hin zu einem vollständigen Schlie-βen der Trennkupplung und dem Vorliegen einer starren Verbindung zwischen der Brennkraftmaschine und der elektrischen Maschine, vorausgesetzt es erfolgt kein Abbruch des Startversuchs aufgrund der zuvor erläuterten Bedingungen.

In anderen Worten wird das Sollkupplungsmoment in Richtung des zweiten Werts vergrößert, solange die Drehzahl der Brennkraftmaschine die Mindestdrehzahl nicht erreicht und kein Abbruch des Startversuchs erfolgt. Das Erhöhen kann kontinuierlich oder in diskreten Schritten erfolgen. Hierdurch wird sichergestellt, dass ein zum Starten der Brennkraftmaschine ausreichendes Istkupplungsmoment vorliegt und bei Vorliegen einer fehlerfreien Brennkraftmaschine diese zuverlässig startet.

Eine Weiterbildung des Verfahrens sieht vor, dass das Vergrößern des Sollkupplungsmoments in bestimmten Sollkupplungsmomentenschritten erfolgt, wobei der Startversuch abgebrochen wird, falls der zweite Wert durch das Sollkupplungsmoment erreicht oder überschritten wird. Bei dem zweiten Wert des Sollkupplungsmoments handelt es sich insbesondere um ein von der Trennkupplung maximal übertragbares Sollkupplungsmoment.

Somit wird das Sollkupplungsmoment nicht kontinuierlich sondern stufenweise vergrößert. Insbesondere wird der Startversuch abgebrochen, wenn das Sollkupplungsmoment den zweiten Wert erreicht, ohne dass die Drehzahl der Brennkraftmaschine die Mindestdrehzahl erreicht. Hierdurch wird sichergestellt, dass einerseits versucht wird, die Brennkraftmaschine durch das Erhöhen des Sollkupplungsmoments erfolgreich zu starten, andererseits wird eine Beschädigung der Trennkupplung vermieden, da der Startversuch abgebrochen wird, bevor das von der Trennkupplung maximal übertragbares Sollkupplungsmoment überschritten wird.

Die Erfindung betrifft weiterhin eine Hybridantriebseinrichtung für ein Kraftfahrzeug, insbesondere zur Durchführung des Verfahrens gemäß den Ausführungen im Rahmen dieser Beschreibung, wobei die Hybridantriebseinrichtung eine Brennkraftmaschine und eine elektrische Maschine aufweist und dazu ausgebildet ist, während eines Startversuchs der Brennkraftmaschine eine zwischen der Brennkraftmaschine und der elektrischen Maschine antriebstechnisch angeordnete Trennkupplung durch zumindest teilweises Schließen auf ein Sollkupplungsmoment einzustellen. Dabei ist vorgesehen, dass die Hybridantriebseinrichtung weiter dazu ausgebildet ist, während des Startversuchs der Brennkraftmaschine ein über die Trennkupplung tatsächlich übertragenes Istkupplungsmoment sowie eine Drehzahl der Brennkraftmaschine zu ermitteln, wobei bei einem Überschreiten eines Schwellenwerts durch einen von dem Istkupplungsmoment abhängigen Kennwert und einem während des Startversuchs durchgehenden Unterschreiten eines Grenzwerts durch ein Integral der Drehzahl über der Zeit der Startversuch abgebrochen wird.

Auf die Vorteile einer derartigen Ausgestaltung der Hybridantriebseinrichtung sowie einer derartigen Vorgehensweise wurde bereits hingewiesen. Sowohl die Hybridantriebseinrichtung als auch das Verfahren zu ihrem Betreiben können gemäß den Ausführungen im Rahmen dieser Beschreibung weitergebildet sein, sodass insoweit auf diese verwiesen wird.

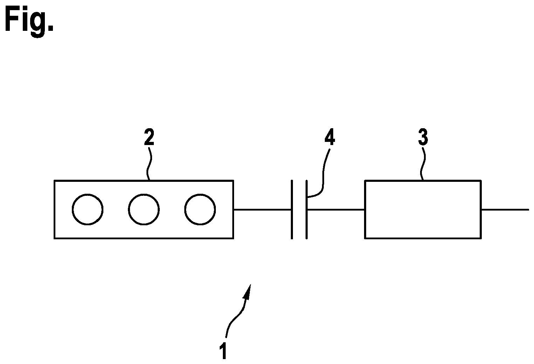

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: eine schematische Darstellung einer Hybridantriebseinrichtung zur Durchführung des Verfahrens gemäß dieser Beschreibung.

Die Figur zeigt eine Hybridantriebseinrichtung 1 für ein Kraftfahrzeug, die eine Brennkraftmaschine 2 und eine elektrische Maschine 3 aufweist. Eine Trennkupplung 4 ist antriebstechnisch zwischen der Brennkraftmaschine 2 und der elektrischen Maschine 3 angeordnet und liegt beispielsweise als Lamellenkupplung vor. Die Hybridantriebseinrichtung 1 stellt zumindest zeitweise ein Antriebsdrehmoment zum Antreiben des Kraftfahrzeugs bereit. Das Antriebsdrehmoment wird jeweils allein oder in einem Hybridbetrieb zumindest zeitweise gemeinsam von der Brennkraftmaschine 2 und der elektrischen Maschine 3 bereit gestellt.

Die Brennkraftmaschine 2 wird während des Hybridbetriebs der Hybridantriebseinrichtung 1 zumindest zeitweise abgestellt beziehungsweise gestoppt. Insbesondere ist es vorgesehen, die Brennkraftmaschine 2 bei Vorliegen einer entsprechenden Anforderungsgröße zu starten und zumindest einen Teil des Antriebsdrehmoments mittels der Brennkraftmaschine 2 zu erzeugen.

Zum Starten der Brennkraftmaschine 2 wird ein Startversuch durchgeführt. Der Startversuch beginnt mit dem Vorliegen der Anforderungsgröße oder einem zumindest teilweisen Schließen der Trennkupplung 4 zum Starten der Brennkraftmaschine 2 und endet entweder mit einem erfolgreichen Start der Brennkraftmaschine 2 oder einem Abbruch des Startversuchs. Im Falle eines erfolgreichen Starts ist die Brennkraftmaschine 2 anschließend in der Lage das Antriebsdrehmoment zumindest teilweise selbstständig bereitzustellen.

Bei dem erfolgreichen Start der Brennkraftmaschine 2 erreicht diese eine Mindestdrehzahl, eine Leerlaufdrehzahl oder eine Synchrondrehzahl. Unter der Synchrondrehzahl ist eine Drehzahl der Brennkraftmaschine zu verstehen, die einer momentan vorliegenden Drehzahl der elektrischen Maschine 3 entspricht. Bei Vorliegen der Synchrondrehzahl liegt an der Trennkupplung 4 kein Schlupf vor, so dass die Trennkupplung 4 vollständig geschlossen und eine starre Verbindung zwischen der Brennkraftmaschine 2 und der elektrischen Maschine 3 hergestellt werden kann.

Bei dem Startversuch wird die Drehzahl der Brennkraftmaschine 2 aus dem Stillstand heraus in Richtung der Mindestdrehzahl erhöht. Zu Beginn des Startversuchs liegt die Brennkraftmaschine 2 vorzugsweise in einem Stillstand vor oder weist eine Drehzahl auf, die kleiner ist als die Mindestdrehzahl.

Während des Startversuchs wird die Trennkupplung 4 zumindest teilweise geschlossen. Hierbei wird die Trennkupplung 4 auf ein Sollkupplungsmoment eingestellt. Das Sollkupplungsmoment dient dem Erhöhen der Drehzahl der Brennkraftmaschine 2 in Richtung der Mindestdrehzahl und entspricht vorzugsweise einem vorgegebenen Anschleppmoment, bei dessen Vorliegen die Drehzahl der Brennkraftmaschine 2 die Mindestdrehzahl erreichen kann.

Das Sollkupplungsmoment wird durch ein weiteres Schließen der Trennkupplung 4 ausgehend von einem ersten Wert in Richtung eines zweiten Werts vergrößert. Das Vergrößern des Sollkupplungsmoments erfolgt bis die Drehzahl der Brennkraftmaschine 2 eine Mindestdrehzahl erreicht hat oder der Startversuch abgebrochen wird. Insbesondere kann es vorgesehen sein, das Sollkupplungsmoment in bestimmten Sollkupplungsmomentenschritten stufenweise zu vergrößern. Das Vergrößern erfolgt insbesondere periodisch, beispielsweise in festgelegten Zeitabständen.

Während des Startversuchs wird das über die Trennkupplung 4 tatsächlich übertragene Istkupplungsmoment ermittelt. Das Istkupplungsmoment wird beispielsweise aus einem Kennfeld der Trennkupplung 4 ermittelt oder alternativ aus einem Drehzahlgradienten und/oder einem Massenträgheitsmoment berechnet. Anhand des ermittelten Istkupplungsmoment kann ein zeitlicher Verlauf des Istkupplungsmoment gebildet werden. Aus dem zeitlichen Verlauf des Istkupplungsmoments wird ein Kennwert ermittelt, der einem nach dem zumindest teilweisen Schließen der Trennkupplung 4 auftretenden Maximalwert des Istkupplungsmoments entspricht.

Vorzugsweise wird als Kennwert ein innerhalb eines bestimmten Zeitfensters nach dem Schließen der Trennkupplung 4 auftretender Maximalwert des Istkupplungsmoments und nicht ein über den gesamten Startversuch auftretender Maximalwert verwendet. Alternativ wird als Kennwert eine Differenz aus dem Maximalwert, insbesondere dem innerhalb des Zeitfensters auftretenden Maximalwerts, und einem zwischen einem vor dem zumindest teilweisen Schließen der Trennkupplung 4 auftretender Minimalwert des Istkupplungsmoments verwendet.

Zusätzlich wird ein Verlauf der Drehzahl der Brennkraftmaschine 2 über der Zeit ermittelt. Aus dem zeitlichen Verlauf der Drehzahl der Brennkraftmaschine 2 wird ein Integral über der Zeit ermittelt. Insbesondere werden hierzu Messwerte der Drehzahl über der Zeit aufsummiert.

Es ist vorgesehen, den Startversuch abzubrechen, wenn der Kennwert einen Schwellenwert überschreitet und das Integral der Drehzahl während des Startversuchs durchgehend einen Grenzwert unterschreitet. Zusätzlich kann vorgesehen sein, dass der Startversuch nur bei einem zusätzlichen Überschreiten eines Temperaturschwellenwerts durch eine Temperatur der Trennkupplung 4 abgebrochen wird. Der Schwellenwert wird beispielsweise so festgelegt, dass er einem Drehmoment oder einem Kennwert entspricht, bei welchem die Brennkraftmaschine 2 normalerweise gestartet werden kann.

Zum Abbrechen des Startversuchs wird die Trennkupplung 4 geöffnet und ein Fehlereintrag in einem Fehlerspeicher eingetragen. Nachfolgend wird ein Schließen der Trennkupplung 4 verhindert, solange der Fehlereintrag in dem Fehlerspeicher eingetragen ist. Der Fehlereintrag wird nach Ablauf eines bestimmten Zeitraums nach dem Abbrechen des Startversuchs aus dem Fehlerspeicher gelöscht und/oder wenn die Temperatur der Trennkupplung 4 den Temperaturschwellenwert über den bestimmten Zeitraum unterschreitet.

Durch das erfindungsgemäße Verfahren wird bei Vorliegen einer schwergängigen oder klemmenden Brennkraftmaschine 2 eine Beschädigung oder Zerstörung der Trennkupplung 4 vermieden.

### BEZUGSZEICHENLISTE:

- 1: Hybridantriebseinrichtung
- 2: Brennkraftmaschine
- 3: Elektrische Maschine
- 4: Trennkupplung

## Patentansprüche

1. Verfahren zum Betreiben einer Hybridantriebseinrichtung (1) für ein Kraftfahrzeug, die eine Brennkraftmaschine (2) und eine elektrische Maschine (3) aufweist, wobei während eines Startversuchs der Brennkraftmaschine (2) eine zwischen der Brennkraftmaschine (2) und der elektrischen Maschine (3) angeordnete Trennkupplung (4) durch zumindest teilweises Schließen auf ein Sollkupplungsmoment eingestellt wird, **dadurch gekennzeichnet, dass** während des Startversuchs ein über die Trennkupplung (4) tatsächlich übertragenes Istkupplungsmoment sowie eine Drehzahl der Brennkraftmaschine (2) ermittelt werden und bei einem Überschreiten eines Schwellenwerts durch einen von dem Istkupplungsmoment abhängigen Kennwert und einem während des Startversuchs durchgehenden Unterschreiten eines Grenzwerts durch ein Integral der Drehzahl über der Zeit der Startversuch abgebrochen wird.

2. Verfahren nach Anspruch 1, **dadurch gekennzeichnet, dass** der Startversuch nur bei einem zusätzlichen Überschreiten eines Temperaturschwellenwerts durch eine Temperatur der Trennkupplung (4) abgebrochen wird.

3. Verfahren nach einem der vorhergehenden Ansprüche, **dadurch gekennzeichnet, dass** zum Abbrechen des Startversuchs die Trennkupplung (4) geöffnet und ein Fehlereintrag an dem Fehlerspeicher eingetragen wird, wobei nachfolgend ein Schließen der Trennkupplung (4) verhindert wird, solange der Fehlereintrag in dem Fehlerspeicher eingetragen ist.

4. Verfahren nach einem der vorhergehenden Ansprüche, **dadurch gekennzeichnet, dass** nach Ablauf eines bestimmten Zeitraums nach dem Abbrechen des Startversuchs der Fehlereintrag aus dem Fehlerspeicher gelöscht wird.

5. Verfahren nach einem der vorhergehenden Ansprüche, **dadurch gekennzeichnet, dass** nur bei einem Unterschreiten des Temperaturschwellenwerts durch die Temperatur der Trennkupplung (4) über den bestimmten Zeitraum der Fehlereintrag aus dem Fehlerspeicher gelöscht wird.

6. Verfahren nach einem der vorhergehenden Ansprüche, **dadurch gekennzeichnet, dass** als Kennwert ein nach dem zumindest teilweisen Schließen der Trennkupplung (4) auftretender Maximalwert des Istkupplungsmoments verwendet wird.

7. Verfahren nach einem der vorhergehenden Ansprüche, **dadurch gekennzeichnet, dass** als Kennwert eine Differenz aus dem Maximalwert und einem vor dem teilweisen Schließen der Trennkupplung (4) auftretender Minimalwert des Istkupplungsmoments verwendet wird.

8. Verfahren nach einem der vorhergehenden Ansprüche, **dadurch gekennzeichnet, dass** das Sollkupplungsmoment bei dem Schließen auf einen ersten Wert eingestellt und während des Startversuchs in Richtung eines zweiten Werts vergrößert wird, bis die Drehzahl der Brennkraftmaschine (2) eine Mindestdrehzahl erreicht hat.

9. Verfahren nach einem der vorhergehenden Ansprüche, **dadurch gekennzeichnet, dass** das Vergrößern des Sollkupplungsmoments in bestimmten Sollkupplungsmomentenschritten erfolgt, wobei der Startversuch abgebrochen wird, falls der zweite Wert durch das Sollkupplungsmoment erreicht oder überschritten wird.

10. Hybridantriebseinrichtung (1) für ein Kraftfahrzeug, insbesondere zur Durchführung des Verfahrens nach einem oder mehreren der vorhergehenden Ansprüche, wobei die Hybridantriebseinrichtung (1) eine Brennkraftmaschine (2) und eine elektrische Maschine (3) aufweist und dazu ausgebildet ist, während eines Startversuchs der Brennkraftmaschine (2) eine zwischen der Brennkraftmaschine (2) und der elektrischen Maschine (3) antriebstechnisch angeordnete Trennkupplung (4) durch zumindest teilweises Schließen auf ein Sollkupplungsmoment einzustellen, **dadurch gekennzeichnet, dass** die Hybridantriebseinrichtung (1) weiter dazu ausgebildet ist, während des Startversuchs der Brennkraftmaschine (2) ein über die Trennkupplung (4) tatsächlich übertragenes Istkupplungsmoment sowie eine Drehzahl der Brennkraftmaschine (2) zu ermitteln, wobei bei einem Überschreiten eines Schwellenwerts durch einen von dem Istkupplungsmoment abhängigen Kennwert und einem während des Startversuchs durchgehenden Unterschreitens eines Grenzwerts durch ein Integral der Drehzahl über der Zeit der Startversuch abgebrochen wird.

## Claims

1. Method for operating a hybrid drive device (1) for a motor vehicle, comprising an internal combustion engine (2) and an electric machine (3), wherein a separating clutch (4) arranged between the internal combustion engine (2) and the electric machine (3) is set to a target clutch torque by at least partial engaging it during an attempt to start the internal combustion engine (2), **characterised in that** an actual clutch torque actually transmitted via the separating clutch (4) and a rotational speed of the internal combustion engine (2) are determined during the attempt to start, and if a characteristic value dependent on the actual clutch torque exceeds a threshold value and if an integral of the rotational speed over time continuously falls below a limit value during the attempt to start, the attempt to start is aborted.

2. Method according to claim 1, **characterised in that** the attempt to start is only aborted if a temperature threshold value is additionally exceeded by a temperature of the separating clutch (4).

3. Method according to one of the preceding claims, **characterised in that**, in order to abort the attempt to start, the separating clutch (4) is disengaged and an error entry is entered in the error memory, wherein subsequently an engagement of the separating clutch (4) is prevented, as long as the error entry is entered in the error memory.

4. Method according to one of the preceding claims, **characterised in that** the error entry is deleted from the error memory after a specific period of time has elapsed after the attempt to start was aborted.

5. Method according to one of the preceding claims, **characterised in that** the error entry is deleted from the error memory only if the temperature of the separating clutch (4) falls below the temperature threshold value over the specific period of time.

6. Method according to one of the preceding claims, **characterised in that** a maximum value of the actual clutch torque occurring after the at least partial engagement of the separating clutch (4) is used as the characteristic value.

7. Method according to one of the preceding claims, **characterised in that** a difference between the maximum value and a minimum value of the actual clutch torque occurring before partial engagement of the separating clutch (4) is used as the characteristic value.

8. Method according to any one of the preceding claims, **characterised in that** the target clutch torque is set to a first value when engaging and increased in the direction of a second value during the attempt to start, until the rotational speed of the internal combustion engine (2) has reached a minimum rotational speed.

9. Method according to any one of the preceding claims, **characterised in that** the target clutch torque is increased in specific target clutch torque increments, wherein the attempt to start is aborted if the second value is reached or exceeded by the target clutch torque.

10. Hybrid drive device (1) for a motor vehicle, in particular for carrying out the method according to one or more of the preceding claims, wherein the hybrid drive device (1) comprises an internal combustion engine (2) and an electric machine (3), and is designed to set a separating clutch (4) arranged between the internal combustion engine (2) and the electric machine (3) to a target clutch torque by at least partial engaging it during an attempt to start the internal combustion engine (2), **characterised in that** the hybrid drive device (1) is further designed to determine an actual clutch torque actually transmitted via the separating clutch (4) and a rotational speed of the internal combustion engine (2) during the attempt to start, wherein if a characteristic value dependent on the actual clutch torque exceeds a threshold value and if an integral of the rotational speed over time continuously falls below a limit value during the attempt to start, the attempt to start is aborted.

## Revendications

1. Procédé destiné au fonctionnement d'un dispositif d'entraînement hybride (1) pour un véhicule automobile, qui présente un moteur à combustion interne (2) et un moteur électrique (3), dans lequel, au cours d'une tentative de démarrage du moteur à combustion interne (2), un débrayage (4) disposé entre le moteur à combustion interne (2) et le moteur électrique (3) est réglé à un couple d'embrayage de consigne par l'intermédiaire d'une fermeture au moins partielle, **caractérisé en ce que**, au cours de la tentative de démarrage, un couple d'embrayage réel transmis de manière effective par l'intermédiaire du débrayage (4), de même qu'une vitesse de rotation du moteur à combustion interne (2) sont déterminés, et, dans le cas d'un dépassement vers le haut d'une valeur seuil par une valeur caractéristique qui dépend du couple d'embrayage réel et d'un dépassement vers le bas sans interruption d'une valeur limite au cours de la tentative de démarrage par une intégrale de la vitesse de rotation par rapport au temps, la tentative de démarrage est interrompue.

2. Procédé selon la revendication 1, **caractérisé en ce que** la tentative de démarrage n'est interrompue que lors d'un dépassement supplémentaire vers le haut d'une valeur seuil de température par une température du débrayage (4).

3. Procédé selon l'une quelconque des revendications précédentes, **caractérisé en ce que**, à des fins d'interruption de la tentative de démarrage, on ouvre le débrayage (4) et on enregistre une entrée de défaillance dans la mémoire d'anomalies, dans lequel on empêche ensuite une fermeture du débrayage (4) jusqu'à l'enregistrement de l'entrée de défaillance dans la mémoire d'anomalies.

4. Procédé selon l'une quelconque des revendications précédentes, **caractérisé en ce que**, après l'expiration d'un laps de temps déterminé après l'interruption de la tentative de démarrage, on efface l'entrée de défaillance de la mémoire d'anomalies.

5. Procédé selon l'une quelconque des revendications précédentes, **caractérisé en ce que**, uniquement lors d'un dépassement vers le bas de la valeur seuil de température par la température du débrayage (4) au-delà du laps de temps déterminé, on efface l'entrée de défaillance de la mémoire d'anomalies.

6. Procédé selon l'une quelconque des revendications précédentes, **caractérisé en ce que**, à titre de valeur caractéristique, on utilise une valeur maximale du couple d'embrayage réel que l'on obtient après la fermeture au moins partielle du débrayage (4).

7. Procédé selon l'une quelconque des revendications précédentes, **caractérisé en ce que**, à titre de valeur caractéristique, on utilise une différence entre la valeur maximale et une valeur minimale du couple d'embrayage réel que l'on obtient avant la fermeture partielle du débrayage (4).

8. Procédé selon l'une quelconque des revendications précédentes, **caractérisé en ce que** l'on règle le couple d'embrayage de consigne au cours de la fermeture à une première valeur et, au cours de la tentative de démarrage, on l'augmente dans la direction d'une deuxième valeur jusqu'à ce que la vitesse de rotation du moteur à combustion interne (2) ait atteint une vitesse de rotation minimale.

9. Procédé selon l'une quelconque des revendications précédentes, **caractérisé en ce que** l'augmentation du couple d'embrayage de consigne a lieu par étapes de couples d'embrayage de consigne déterminées, dans lequel la tentative de démarrage est interrompue au cas où la deuxième valeur est atteinte ou dépassée vers le haut par le couple d'embrayage de consigne.

10. Dispositif d'entraînement hybride (1) pour un véhicule automobile, en particulier pour la mise en oeuvre du procédé selon une ou plusieurs des revendications précédentes, dans lequel le dispositif d'entraînement hybride (1) présente un moteur à combustion interne (2) et un moteur électrique (3) et est conçu pour régler, au cours d'une tentative de démarrage du moteur à combustion interne (2), un débrayage (4) disposé de manière opérationnelle entre le moteur à combustion interne (2) et le moteur électrique (3) à un couple d'embrayage de consigne par l'intermédiaire d'une fermeture au moins partielle, **caractérisé en ce que** le dispositif d'entraînement hybride (1) est en outre conçu pour déterminer, au cours de la tentative de démarrage du moteur à combustion interne (2), un couple d'embrayage réel transmis de manière effective par l'intermédiaire du débrayage (4), de même qu'une vitesse de rotation du moteur à combustion interne (2), dans lequel, dans le cas d'un dépassement vers le haut d'une valeur seuil par une valeur caractéristique qui dépend du couple d'embrayage réel et d'un dépassement vers le bas sans interruption d'une valeur limite au cours de la tentative de démarrage par une intégrale de la vitesse de rotation par rapport au temps, la tentative de démarrage est interrompue.
